# EUROPEAN PATENT APPLICATION

(11) **EP 0 534 038 A1**
(43) Date of publication of application: **31.03.1993**
(21) Application number: 91830403.1
(22) Date of filing: 27.09.1991
(51) Int. Cl.: B26D 7/01, B23D 29/02, E06B 9/266, B26D 7/00

(54) **Improved blind slat clippers**

(71) Applicant: Jian, Bee-Suo, Changhua Hsien, Taiwan (TW)
(72) Inventor: Jian, Bee-Suo, Changhua Hsien, Taiwan (TW)
(74) Representative: Righetti, Giuseppe

(57) **Abstract**

Improved blind slat clippers provided with a measuring device (37) having a ruler (371), the ruler being slidably rotatably disposed under a lower blade holder (32) of the clippers so that a blind slat can be accurately cut by a fixed and measured length, the ruler being suitable to be hidden under the lower blade holder for the convenience of storage.

## Description

The present invention relates to improved blind slat clippers which are adapted to clip a blind slat, and more particularly to blind slat clippers which enable the slat to be cut accurately, easily and quickly by a predetermined length.

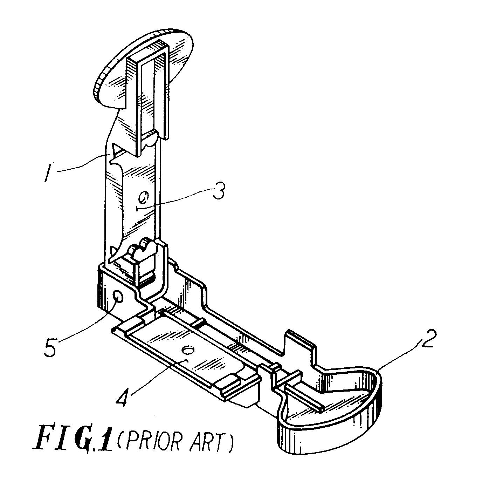

As shown in Fig. 1, the conventional clippers for blind slats are composed of an upper and a lower blade holders 1, 2 respectively, provided with an upper and a lower blades 3, 4. The upper and lower blade holders 1, 2 is pivoted on a pivot 5 so that they can be pivoted toward each other and drive the upper and lower blades 3, 4 to clip the ends of blind slats for achieving an alignment of the blind slats.

Such type of clippers are simply constructed and therefore can provide limited effect when used. Several shortcomings of such clippers are exemplified as follows:
1. No auxiliary measuring device is provided on the clippers so that a user must first make a mark on the slat and then place the clippers to clamp the slat at the mark position and then clip the slat. This procedure is troublesome and always causes inconvenience.
2. Although the slat is marked, however, the clippers are aligned with the mark visually. Inevitably, considerable error exists in clipping operation.
3. No folding device is provided so that the clippers keep in a stretched state to occupy a relatively large room so that the clippers cannot be conveniently stored.

It is therefore tried by the applicant to develop the present invention to solve the above problems.

It is a primary object of this invention to provide a kind of blind slat clippers which is provided with a measuring device having an adjustable ruler whereby a blind slat can abut against an end of the ruler to be cut accurately by a measured fixed length.

It is a further object of this invention to provide the above clippers which can be folded to reduce the occupied room for the convenience of storage.

The present invention can be better understood by the following description with reference to accompanying drawings wherein:
- Fig. 1 is a perspective view of the conventional clippers for blind slat;
- Fig. 2 is a perspective exploded view of this invention;
- Fig. 3 is a perspective assembled view of this invention;
- Fig. 4 is a sectional view of this invention in a first state;
- Fig. 5 is a sectional view of this invention in a second state;
- Fig. 6 is a perspective view showing that the ruler is hidden under the lower blade holder; and
- Fig. 7 shows that the upper and lower blade holders are folded together and engaged with the L-shaped arm thereunder.

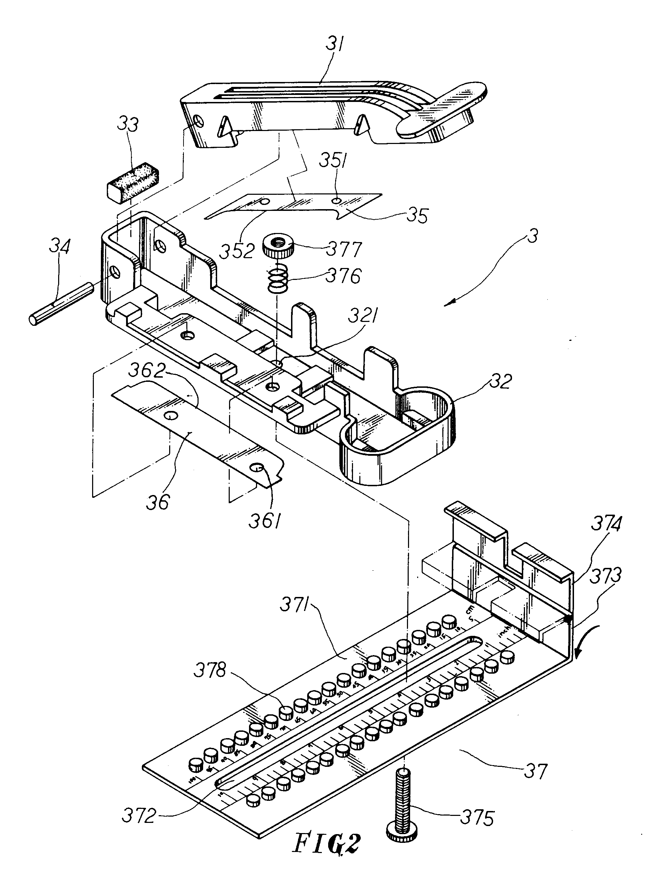

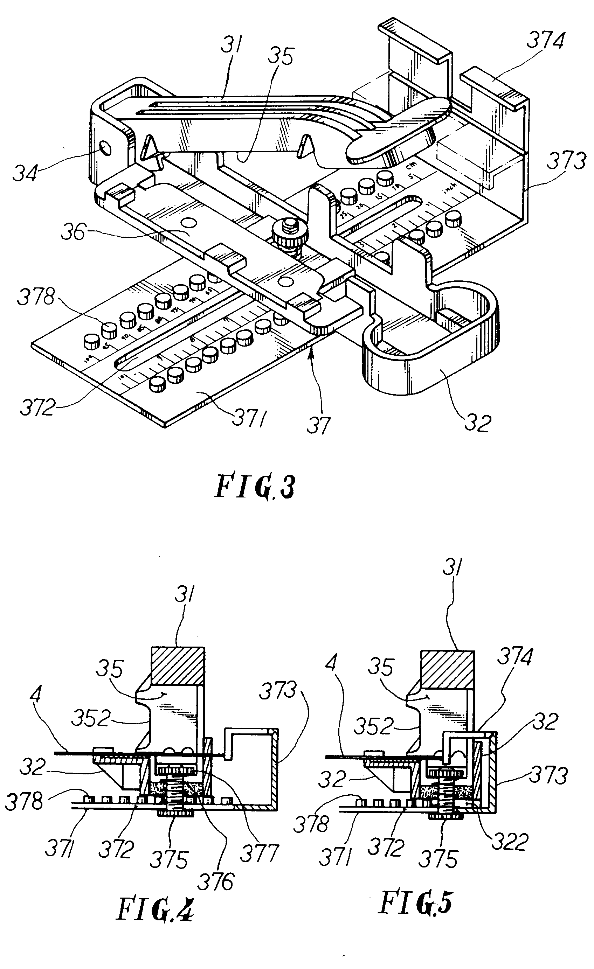

Please refer to Figs. 2 and 3. The present blind slat clippers 3 include an upper blade holder 31, a lower blade holder 32 pivoted thereto by a pin 34, a resilient member 33 disposed between the upper and lower blade holders 31, 32, an upper and a lower blades 35, 36 mounted on the blade holders 31, 32, and a pivotable and movable measuring device 37 connected to bottom portion of the lower blade holder 32, wherein:
- the upper blade 35 is formed with two fixing projections 351 adapted to fit into two fixing holes of the upper blade holder 31 for securing the upper blade 35 thereto; a recess 352 is formed on a side of the upper blade 35;
- the lower blade 36 is also formed with two fixing projections 361 adapted to fit into two fixing holes of the lower blade holder 32 for securing the lower blade thereto; an extension 362 is formed on a side of the lower blade 36 corresponding to the recess 352 of the upper blade 35;
- the measuring device 37 includes an L-shaped ruler 371 formed with a central guide slot 372; scales are disposed on two sides of the slot 372 and two parallel rows of protuberances 378 are disposed beside the scales whereby the protuberances 378 can be slidably received within two guide grooves 322 formed on the bottom of the lower blade holder 32; a stopper 373 is formed at one end of the ruler 371 and an L-shaped arm 374 is pivoted to an edge of the stopper 373; a recess is formed at the central portion of the L-shaped arm 374; a pivot 375 is extended through the guide slot 372 and a through hole 321 of the lower blade holder 32 to fit with a spring 376 and a nut 377 whereby via the adjustment of the pivot 375, the ruler 371 can be linearly moved or rotated or fastened to the lower blade holder 32.

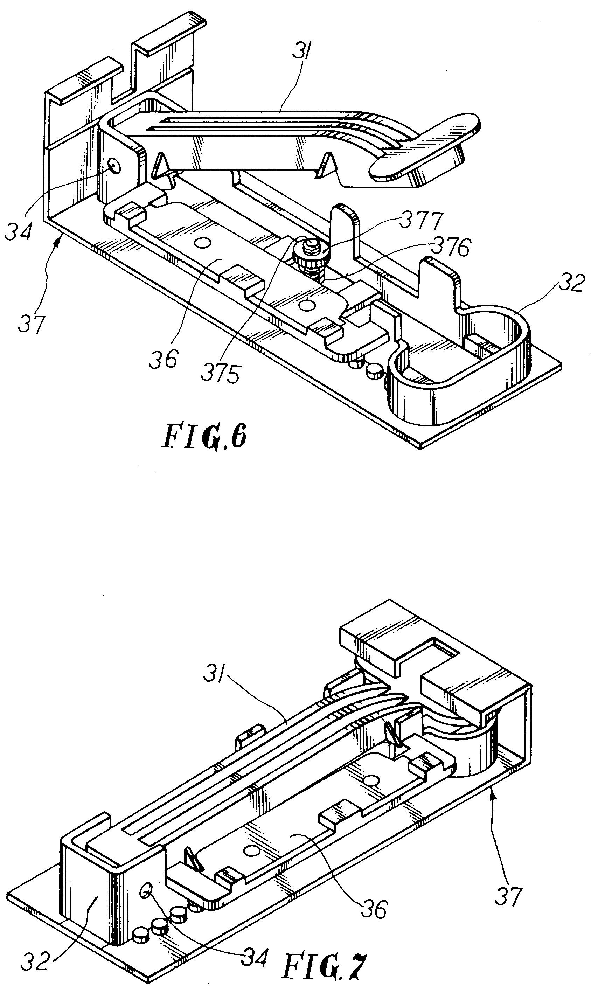

According to the above arrangement, the upper and lower blade holders 31, 32 can move relatively to each other, making the recess 352 and extension 362 of the upper and lower blades 35, 36 match with each other for clipping the blind slats with various widths. In addition, the pivot 375 can be pressed downward to loosen the ruler 371 so that the ruler 371 can be displaced and fixed for clipping the blind slat by a fixed length, as shown in Figs. 4 and 5. Moreover, the ruler 371 can be rotated and hidden under the lower blade holder 32, as shown in Figs. 6 and 7. When not used, the upper blade holder 31 can be pressed downward toward the lower blade holder 32 and rotated so as to make the end of the upper blade holder 31 engage with the lower portion of the L-shaped arm 374, as shown in Fig. 7. Therefore, the present invention possesses at least the following advantages:
1. As shown in Fig. 4, the ruler 371 enables the slat to be cut by a fixed and correct length and facilitates the clipping operation.
2. The ruler 371 can be closely hidden under the lower blade holder 32 as shown in Fig. 6 and the upper and lower blade holders 31, 32 can be jointed together and rotated to engage with the L-shaped arm 374 thereunder so that the occupied room is reduced for the convenience of storage, as shown in Fig. 7.
3. When performing clipping by small size, the L-shaped arm 374 can be pivoted inward for the slat to abut thereagainst as shown in Fig. 5. As a result, the shortcomings existing in conventional visually measuring type of clipping can be eliminated.

The present invention can be variously modified without departing from the scope thereof.

## Claims

1. Improved blind slat clippers comprising an upper blade holder (31), a lower blade holder (32) pivoted thereto, a resilient member (33) disposed between said upper and lower blade holders, an upper and a lower blades (35, 36) mounted on said upper and lower blade holders (31, 32), and a pivotable and movable measuring device (37) connected to bottom portion of said lower blade holder (32), characterized in that said upper blade (31) is formed with a recess (352) on its one side and said lower blade (36) is formed with an extension (362) on its one side corresponding to said recess (352) of said upper blade so that said extension can match with said recess for clipping, and said measuring device (37) includes an L-shaped ruler (371) formed with a guide slot (372) whereby a pivot (375) can be extended therethrough and further extended through a through hole of said lower blade holder to fit with a spring (376) and a nut (377), a stopper (373) being formed at one end of said ruler (371), scales being disposed on two sides of said slot and two parallel rows of protuberances (378) being disposed beside said scales whereby said protuberances can be slidably received within two guide grooves formed on the bottom of said lower blade holder, said ruler enabling a blind slat to be clipped by a fixed and correct length and the slat can abut against said stopper of said ruler to be easily clipped, said upper and lower blade holders being jointable with each other to be rotated and engaged under an L-shaped arm (374) of said stopper to reduce occupied room for easy storage.

2. Blind slat clippers as claimed in claim 1, wherein said L-shaped arm (374) is pivoted to an end of said stopper (373) of said ruler (371) and said L-shaped arm is formed with a central recess and can be pivoted into a vertical or a horizontal position.
